# EUROPEAN PATENT APPLICATION

(11) **EP 1 659 713 A1**
(43) Date of publication of application: **24.05.2006**
(21) Application number: 05255065.4
(22) Date of filing: 17.08.2005
(51) Int. Cl.: H04H 1/00, G08G 1/09

(54) **Apparatus and method for providing location-based information**

(30) Priority: 16.11.2004 KR 2004093544
(71) Applicant: Samsung Electronics Co., Ltd., Suwon-si, Gyeonggi-Do (KR)
(72) Inventor: Seo, Ju-hee, Yeongtong, Suwon-si Gyeonggi-do (KR)
(74) Representative: Brandon, Paul Laurence

(57) **Abstract**

An apparatus and method for providing location-based information are provided. The apparatus includes: an input unit, which receives information on a first location and information on a second location from a user; a decoding unit (410), which decodes the location-based service data contained in the broadcast signals; a control unit (430), which selects location-based service data regarding a region between the first and second locations from among the location-based service data decoded by the decoding unit; and a display unit (460), which displays the selected location-based service data. The apparatus can receive broadcast signals containing location-based service data and can provide location-based information to a user without the aid of a global positioning system (GPS) receiver, a map generator, or a storage medium in which map data is stored.

## Description

The present invention relates to apparatus and methods for providing location-based information.

Digital audio broadcasting (DAB) provides audio broadcast services with sound quality as high as compact discs and a variety of additional data services, such as weather forecasts, traffic and entertainment news broadcasts, and video data services. DAB is classified into terrestrial DAB or satellite DAB. Terrestrial DAB has already been commercialized in Europe and the United States. Specifically, an in-band on-channel (IBOC) approach has been adopted as a standard for providing DAB services by the United States, while an out-of-band approach, i.e., Eureka 147, has been adopted as a standard for providing DAB services by Europe.

A Transport Protocol Experts Group (TPEG) standard is an application standard for transmitting transport and travel information as DAB services. Transport data is general information on regional traffic situations, such as road traffic messages, public transportation information, and parking information. Examples of travel information may include the locations of tourist attractions in a predetermined region and the locations of hotels and motels in the predetermined region. Accordingly, a user with a DAB receiver can obtain transport and travel information of the predetermined region in real time through TPEG services.

Digital multimedia broadcasting (DMB) is an improved version of DAB. DMB provides all of audio, video, and data broadcast programs. DMB, like DAB, is classified into terrestrial DMB or satellite DMB based on the means of transmission. DMB may adopt a DAB standard, such as Eureka-147, as a standard for its audio broadcast programs.

In order to provide a user with TPEG services in consideration of the user's current location, a conventional DAB receiver of the user is required to include a communication module, such as a global positioning system (GPS) receiver. In addition, transport data transmitted to the DAB receiver as a TPEG service is text data or graphic data and is often combined with map data transmitted to the DAB receiver as a TPEG service in order to provide more useful and detailed information to the user. Accordingly, the conventional DAB receiver is also required to include a map generator or a storage medium in which map data is stored in order to display the combination result to the user.

Preferred embodiments of the present invention aims to provide an apparatus and method for providing location-based information, in which broadcast signals containing location-based service data is received and location-based information is provided based on the received broadcast signals.

Preferred embodiments of the present invention also aims to provide an apparatus for providing location-based information that can receive broadcast signals containing location-based service data and can provide location-based information based on the received broadcast signals without the aid of a global positioning system (GPS) receiver.

Preferred embodiments of the present invention also aims to provide an apparatus for providing location-based information that can receive broadcast signals containing location-based service data and can provide location-based information based on the received broadcast signals without the aid of a map generator or a storage medium in which map data is stored.

According to an aspect of the present invention, there is provided an apparatus for providing location-based information, which receives broadcast signals containing location-based service data and provides location-based information. The apparatus includes: an input unit, which receives information on a first location and information on a second location from a user; a decoding unit, which decodes the location-based service data contained in the broadcast signals; a control unit, which selects location-based service data regarding a region between the first and second locations from among the location-based service data decoded by the decoding unit; and a display unit, which displays the location-based service data selected by the control unit.

According to another aspect of the present invention, there is provided a method of providing location-based information, which receives broadcast signals containing location-based service data and provides location-based information. The method includes: receiving information on a first location and information on a second location from a user; decoding the location-based service data contained in the broadcast signals; selecting location-based service data regarding a region between the first location and the second location from among the location-based service data which is decoded; and displaying the location-based service data which is selected.

According to another aspect of the present invention, there is provided a computer readable recording medium for storing a computer program which executes a the method of providing location-based information.

Further features of the present invention are set out in the appended claims.

The present invention will become more apparent by describing in detail exemplary embodiments thereof with reference to the attached drawings in which:

FIG. 1 is a diagram illustrating the structure of a digital audio broadcasting transmission frame according to an exemplary embodiment of the present invention; FIG. 2 is a diagram illustrating the structure of a DAB service according to an exemplary embodiment of the present invention;

FIG. 3 is a diagram illustrating the structure of a TPEG service according to an exemplary embodiment of the present invention;

FIG. 4 is a block diagram of an apparatus for providing location-based information according to an exemplary embodiment of the present invention;

FIG. 5 is a flowchart of a method of providing location-based information according to an exemplary embodiment of the present invention;

FIG. 6 is a diagram illustrating a virtual zone used by a user to select necessary location-based service data; and

FIG. 7 is a diagram illustrating a plurality of virtual zones.

The present invention will now be described more fully with reference to the accompanying drawings in which exemplary embodiments of the invention are shown, wherein DAB services having a TPEG standard are provided as an example of its application.

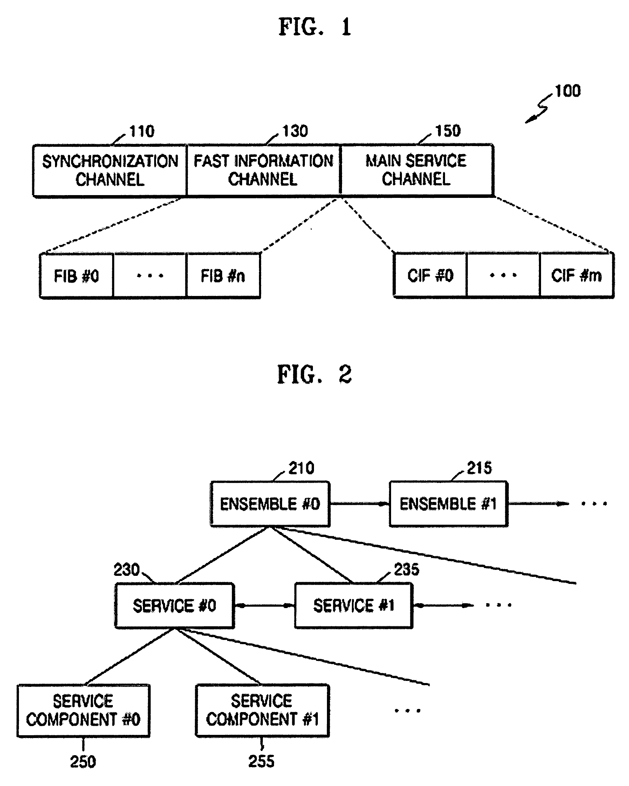

FIG. 1 is a diagram illustrating the structure of a DAB transmission frame 100 according to an exemplary embodiment of the present invention. Referring to FIG. 1, the DAB transmission frame 100 includes a synchronization channel (SC) 110, a fast information channel (FIC) 130, and a main service channel (MSC) 150.

The SC 110 is comprised of null symbols, which are used for determining a transmission mode, and reference symbols, which are used for orthogonal frequency division multiplexing (OFDM) symbol synchronization and carrier wave frequency synchronization. The FIC 130 is a channel used for transmitting information needed by a receipt device to process input data, such as the format of the input data or information on a method in which the input data is multiplexed, or used for transmitting data that needs to be quickly transmitted. The FIC 130 contains multiplex configuration information specifying the structures of sub-channels thereof and service information, i.e., additional information on services provided by it. Accordingly, it is possible to determine which service data is currently being transmitted via the MSC 150 and which application is to use the service data currently being transmitted via the MSC 150 by referencing the FIC 130. In addition, the FIC 130 includes a fast information data channel (FIDC), which contains data that needs to be quickly transmitted within a predetermined amount of time. The FIDC contains, for example, simple messages specifying emergencies. The FIC 130 is comprised of a plurality of fast information blocks (FIBs).

The MSC 150 transmits content data provided by a service provider. The MSC 150 may contain part of FIC data if the FIC 130 is full of data. However, since a time interleaving method is applied to the MSC 150, it takes much time to decode data contained in the MSC 150. Thus, FIC data that needs to be quickly transmitted cannot be contained in the MSC 150. Data is transmitted in either a stream mode or a packet mode. In a stream mode, data without a header is transmitted at a fixed bit rate. However, in a packet mode, data with a header attached thereto is transmitted, so a variety of service components can be multiplexed into a given sub-channel. Therefore, the processing of data transmitted as a packet additionally includes analyzing a header of the packet. The MSC 150 is comprised of a plurality of common interleaved frames (CIFs).

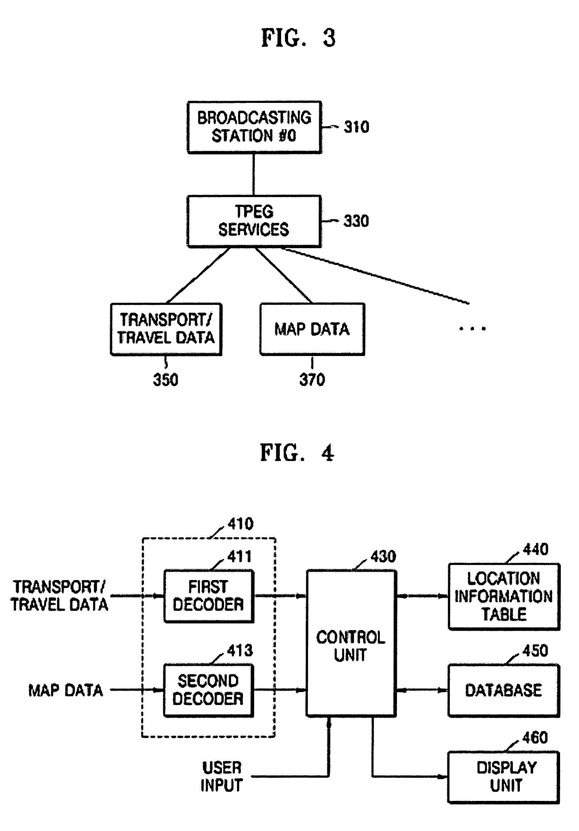

FIG. 2 is a diagram illustrating the structure of a DAB service according to an exemplary embodiment of the present invention. The DAB service includes ensembles, services, and service components.

An ensemble is a bitstream into which a plurality of encoded audio streams and a plurality of data are multiplexed along with system data after being subjected to a channel encoding operation. In general, one broadcasting station provides only one ensemble. A service is an output selected by a user, such as a program service or a data service. Service components are components of a service. Service components of a service are associated with each other due to multiplex configuration information (MCI) and are transmitted over a sub-channel or a FIDC.

Referring to FIG. 2, the DAB service includes at least two ensembles, i.e., ensembles #0 and #1 (210 and 215). Ensemble #0 (210) provides at least two services, i.e., services #0 and #1 (230 and 235). Service #0 (230) includes at least two service components, i.e., service components #0 and #1 (250 and 255).

FIG. 3 is a diagram illustrating the structure of a TPEG service according to an exemplary embodiment of the present invention. Referring to FIG. 3, broadcasting station #0 (310) corresponds to an ensemble generated by broadcasting station #0. Broadcasting station #0 (310) provides a TPEG service 330. The TPEG service 330 includes a plurality of service components, i.e., transport/travel data 350 and map data 370. The transport/travel data 350 contains transport and/or travel-related information of a plurality of regions, and the map data 370 contains map images of the regions.

FIG. 4 is a block diagram of an apparatus for providing location-based information according to an exemplary embodiment of the present invention. Referring to FIG. 4, the apparatus includes a decoding unit 410, a control unit 430, a location information table 440, a database 450, and a display unit 460. The decoding unit 410 includes a first decoder 411 and a second decoder 413.

The apparatus, which is included in a DAB receipt apparatus (not shown), receives DAB signals containing location-based service data and provides location-based information to a user based on the received DAB signals. Examples of the location-based service data may include, but not restricted to, the transport/travel data 350 and the map data 370 of FIG. 3. In other words, the location-based service data may be any type of data as long as it is location-based.

The DAB receipt apparatus includes a tuner, a demodulator, and a channel decoder. The tuner receives DAB signals. The demodulator generates a DAB transmission frame (100 of FIG. 1) by demodulating the DAB signals received by the tuner. The channel decoder generates service data by performing a channel decoding operation on the DAB transmission frame generated by the demodulator. Examples of the service data may include the transport/travel data 350 and the map data 370 of FIG. 3.

The first decoder 411 receives transport/travel data and decodes the received transport/travel data. The second decoder 413 receives map data and then decodes the received map data. The location information table 440 is a table containing location information referenced when converting location information input by the user to be compatible with the format of location information contained in the transport/travel data and the map data. For example, if the location information contained in the transport/travel data and the map data is expressed as pairs of WGS84 coordinates obtained from a GPS, the location information table 440 stores pairs of WGS84 coordinates so that the location information input by the user can match with one of the pairs of WGS84 coordinates stored in the location information table 440. However, it is impossible for the location information table 440 to deal with all of the location information input by the user because there is a clear limit in storing pairs of WGS84 coordinates in the location information table 440. Thus, the location information table 440 may be prepared to be able to provide only pairs of WGS84 coordinates corresponding to representative locations, buildings, or milestones, thus reducing the amount of data contained in the location information table 440.

The database 450 stores transport/travel data and map data selected by the control unit 430.

A method of providing location-based information according to an exemplary embodiment of the present invention will now be described more fully with reference to FIGS. 4 through 7.

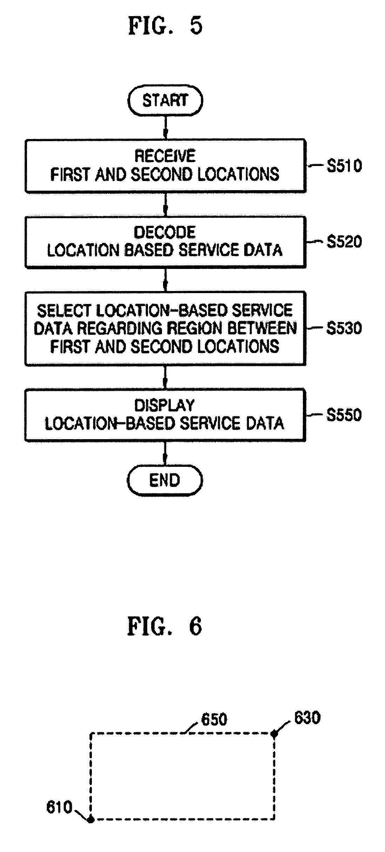

FIG. 5 is a flowchart of a method of providing location-based information according to an exemplary embodiment of the present invention. Referring to FIGS. 4 and 5, in operation S510, first location information and second location information are received from a user. A DAB receipt apparatus having the apparatus of FIG. 4 includes an input unit, such as a touch screen. Accordingly, the user may input the first and second location information to the DAB receipt apparatus using the input unit in order to obtain transport or travel information and a map of a region between first and second locations. The first and second location information input by the user is input to the control unit 430, and the control unit 430 obtains location information corresponding to the input first and second location information from the location information table 440.

In operation S520, the decoding unit 410 receives location-based service data contained within DAB signals and decodes the location-based service data.

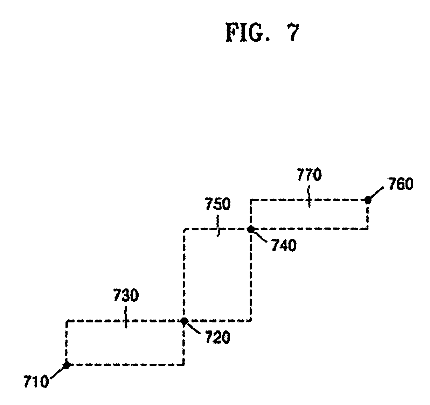

In operation S530, the control unit 430 selects location-based service data regarding the region between the first and second locations from among location-based service data. The control unit 430 selects the location-based service data regarding the region between the first and second locations from the location-based service data in the following manner. FIG. 6 is a diagram illustrating a method of selecting location-based service data needed by the user. Referring to FIG. 6, if the user inputs information on first and second locations 610 and 630 using the input unit of the DAB receipt apparatus in order to obtain transport data of a region between the first and second locations 610 and 630, the control unit 430 sets a virtual zone 650, which is a rectangle having the first and second locations 610 and 630 as its vertices. Thereafter, the control unit 430 selects location-based service data regarding locations included in the virtual zone 650 from among location-based service data with reference to location information included in the location-based service data and then displays the selected location-based service data so that the user obtains transport data of the region between the first and second locations 610 and 630.

The location-based service data selected by the control unit 430 is stored in the database 450. Examples of the selected location-based service data may include transport/travel data and map data. The transport/travel data stored in the database 450 is data decoded by the first decoder 411, and the map data stored in the database 450 is data decoded by the second decoder 413.

In operation S550, the control unit 430 combines the transport/travel data and the map data stored in the database 450 with reference to their respective location information and then displays the combination result to the user using the display unit 460. The transport/travel data and map data displayed using the display unit 460 are programmed so that they can be automatically updated at intervals of a predetermined period of time or can be updated at the request of the user.

The transport/travel data and the map data stored in the database 450 are preferably, but not necessarily, deleted if they satisfy a predetermined condition. For example, if an expiration time field of a header of the transport/travel data or the map data specifies the expiration date of the transport/travel data or the map data, the control unit 430 may delete the transport/travel data or the map data with reference to the expiration time field.

In the present embodiment, the user inputs two location information, i.e., the first and second location information, to the DAB receipt apparatus. However, the present invention is also applicable to an occasion when the user inputs two or more location information to the DAB receipt apparatus. For example, as shown in FIG. 7, if the user inputs information on a first location 710, information on a second location 720, information on a third location 740, and information on a fourth location 760, the control unit 430 sets a first virtual zone 730, a second virtual zone 750, and a third virtual zone 770 based on the first, second, third, and fourth location information 710, 720, 740, and 760 input by the user. The control unit 430 selects location-based service data regarding locations included in the first, second, and third virtual zones 730, 750, and 770 from location-based service data with reference to the first, second, third, and fourth location information 710, 720, 740, and 760 input by the user and then displays the selected location-based service data to the user. Accordingly, the user can obtain location-based information regarding the first, second, and third virtual zones 730, 750, and 770.

The present invention can be realized as computer-readable codes written on a computer-readable recording medium. Examples of the computer-readable recording medium include nearly all types of recording medium on which data can be stored in a computer-readable manner. For example, the computer-readable recording medium may be a ROM, a RAM, a CD-ROM, a magnetic tape, a floppy disc, an optical data storage, or a carrier wave (e.g., data transmission through the Internet). In addition, the computer-readable recording medium can be distributed over a plurality of computer systems connected to a network so that data written on the computer-readable recording medium can be stored and executed in a decentralized manner.

The present invention has been described above as being applicable to DAB signals but is not restricted to them. In other words, the present invention is also applicable to DMB signals containing DAB service data. In addition, the present invention has been described above as being applicable to TPEG services but is not restricted to them. Moreover, transport/travel data and map data have been described above as examples of location-based service data. However, location-based service data to which the present invention is not restricted to those set forth herein.

As described above, the apparatus for providing location-based information according to preferred embodiments of the present invention can receive broadcast signals containing location-based service data and can provide location-based information to a user based on the received broadcast signals without the aid of a GPS receiver, a map generator, or a storage medium in which map data is stored.

While the present invention has been particularly shown and described with reference to exemplary embodiments thereof, it will be understood by those of ordinary skill in the art that various changes in form and details may be made herein without departing from the spirit and scope of the present invention as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for providing location-based information, which receives broadcast signals containing location-based service data and provides location-based information, the apparatus comprising:
an input unit which receives information on a first location and information on a second location from a user;
a decoding unit (410) which decodes the location-based service data contained in the broadcast signals;
a control unit (430) which selects location-based service data regarding a region between the first location and the second location from among the location-based service data decoded by the decoding unit; and
a display unit (460) which displays the location-based service data selected by the control unit.

2. The apparatus of claim 1, wherein the control unit (430) sets a virtual zone between the first location and the second location and selects location-based service data regarding locations in the virtual zone from among the location-based service data decoded by the decoding unit.

3. The apparatus of claim 2, wherein the control unit (430) selects location-based service data regarding the region between the first location and the second location from among the location-based service data decoded by the decoding unit (410) with reference to location information included in the location-based service data decoded by the decoding unit.

4. The apparatus of claim 2 or claim 3, wherein the virtual zone is a rectangle having the first location and the second location as its vertices.

5. The apparatus of any preceding claim, wherein the selected location-based service data comprises transport or travel data regarding the region between the first location and the second location and map data regarding the region between the first location and the second location, and
wherein the control unit (430) combines the transport or travel data and the map data to generate a combination result and displays the combination result to the display unit (460).

6. The apparatus of any preceding claim further comprising:
a table (440) that converts the first location and the second location information input by the user so that the first location and the second location information is compatible with the format of location information contained in the location-based service data decoded by the decoding unit (410).

7. The apparatus of any preceding claim further comprising a database (450) which stores the location-based service data selected by the control unit (430).

8. The apparatus of claim 7, wherein the control unit (430) deletes the location-based service data stored in the database (450) if the location-based service data stored in the database satisfies a predetermined condition.

9. The apparatus of claim 7, wherein the control unit (430) deletes the location-based service data stored in the database (450) with reference to expiration date information included in the location-based service data stored in the database.

10. The apparatus of any preceding claim, wherein the location-based service data comprises transport or travel data, and the transport or travel data comprises location information which corresponds to at least one region.

11. The apparatus of any preceding claim, wherein the location-based service data comprises map data, and the map data comprises location information which corresponds to at least one region.

12. The apparatus of any preceding claim, wherein the location-based service data comprises Transport Protocol Experts Group (TPEG) data.

13. A method of providing location-based information, which receives broadcast signals containing location-based service data and provides location-based information, the method comprising:
receiving information on a first location and information on a second location from a user;
decoding the location-based service data contained in the broadcast signals;
selecting location-based service data regarding a region between the first location and the second location from among the location-based service data which is decoded; and
displaying the location-based service data which is selected.

14. The method of claim 13, wherein the selecting of the location-based service data regarding the region between the first location and the second location comprises:
setting a virtual zone between the first location and the second location; and
selecting location-based service data regarding locations in the virtual zone from among the location-based service data.

15. The method of claim 14, wherein in the selecting of the location-based service data regarding the region between the first location and the second location, the location-based service data regarding the region between the first location and the second location is selected from among the location-based service data with reference to location information included in the location-based service data.

16. The method of any one of claims 13 - 15, wherein the virtual zone is a rectangle having the first location and the second location as its vertices.

17. The method of any one of claim 13 - 16, wherein if the location-based service data which is selected comprises transport or travel data regarding the region between the first location and the second location and map data regarding the region between the first location and the second location, the transport or travel data and the map data are combined to generate a combination result, and the combination result is displayed in the displaying of the location-based service data which is selected.

18. The method of any one of claims 13 - 17, wherein the location-based service data comprises transport or travel data, and the transport or travel data comprises location information which corresponds to at least one region.

19. The method of any one of claims 13 - 18, wherein the location-based service data comprises map data, and the map data comprises location information which corresponds to at least one region.

20. The method of any one of claims 13 - 19, wherein the location-based service data comprises Transport Protocol Experts Group (TPEG) data.

21. A computer-readable recording medium for storing a computer program which executes a method of providing location-based information, which receives broadcast signals containing location-based service data and provides location-based information, the method comprising:
receiving information on a first location and information on a second location from a user;
decoding the location-based service data contained in the broadcast signals.
selecting location-based service data regarding a region between the first location and the second location from among the location-based service data which is decoded; and
displaying the location-based service data which is selected.
